# EUROPÄISCHE PATENTANMELDUNG

(11) **EP 0 659 689 A2**
(43) Veröffentlichungstag der Anmeldung: **28.06.1995**
(21) Anmeldenummer: 94810685.1
(22) Anmeldetag: 02.12.1994
(51) Int. Cl.: C02F 1/00, B01D 37/03, B01D 29/23

(54) **Entsorgung von Dispersionen**

(30) Priorität: 03.12.1993 CH 3613/93
(71) Anmelder: AWL AG für Wasser- und Lufttechnik, CH-8450 Andelfingen (CH)
(72) Erfinder: Stucki, Eduard, CH-8450 Andelfingen (CH)
(74) Vertreter: Patentanwälte Breiter + Wiedmer AG

(57) **Zusammenfassung**

Dispersionen, insbesondere Dispersionsfarben, und entsprechende Feststoffpartikel werden aus allen Arten von Abwässern (35), auch ölhaltigen, entfernt, indem wenigstens ein Ausflockungsmittel (42) zugegeben, homogen eingemischt, und das ausgeflockte Produkt (36) abgetrennt wird. Das rezyklierte gereinigte Abwasser (68) wird zur Erzeugung einer Mischbewegung in den Reaktionskanal (40) geleitet und weiter zum Vorspülen verwendet.

Die Vorrichtung zur Durchführung des Verfahrens besteht im wesentlichen aus einem Entsorgungsgerät (38) mit einem obenliegenden Reaktionsteil (40) zum Mischen und Ausflocken und einem untenliegenden Filterteil (10). Der Reaktionsteil (40) ist mit einem integrierten hyraulischen Mischwerk (46), der Filterteil (10) mit einem auswechselbaren Filter (76) ausgerüstet. Sowohl Reaktionsteil (40) als auch Filterteil (10) haben einen verschliessbaren Ablauf.

## Beschreibung

Die Erfindung bezieht sich auf ein Verfahren und eine Vorrichtung zum Entfernen von Dispersionen, insbesondere Dispersionsfarben, und entsprechenden Feststoffpartikeln aus Abwasser, nach dem Oberbegriff von Patentanspruch 1 und 2.

Während langer Zeit sind Farben in organischen Lösungsmitteln gelöst und flächig aufgetragen worden. Nach dem Verdunsten des Lösungsmittels bildet sich beim Flachmalen eine homogene, auf der Unterlage haftende Schicht. Organische Lösungsmittel haben den Vorteil, dass sie rasch verdunsten. Sie sind jedoch feuergefährlich, gesundsheitsschädigend und/oder umweltbelastend. Bei ihrer Anwendung müssen - falls diese noch gestattet ist - aus arbeitshygienischen und umweltschützerischen Gründen stets besondere Anlagen gebaut und/oder Vorkehrungen getroffen werden, damit das unkontrollierte Entweichen von Lösungsmitteln verhindert oder zumindest stark vermindert wird.

Seit mehreren Jahren sind deshalb zunehmend wasserlösliche Dispersionsfarben in Gebrauch, welche nicht nur ökologisch weit unbedenklicher, sondern auch in keiner Weise gesundheitsschädigend sind. Das weniger leichte Verdunsten des Wassers wird deshalb in der Gesamtbilanz weit mehr als ausgeglichen. Nach heutigen Normen können dispersionshaltige Abwässer, zweckmässig verdünnt, in das öffentliche Kanalisationsnetz eingespiesen werden, wo sie weiter automatisch verdünnt und einer Abwasserreinigungsanlage zugeführt werden. In ökologischer und ökonomischer Hinsicht bedeutet dies gegenüber herkömmlichen Oelfarben einen gewaltigen Vorteil.

Pinsel, Rollen und andere Malerwerkzeuge zum Auftragen von Dispersionen werden zum Reinigen in ein mit Wasser gefülltes Gefäss gestellt. Die beispielsweise von den Pinselhaaren gelösten Feststoffpartikel der Dispersionsfarbe sinken infolge der Schwerkraft zu Boden und gelangen beim Spülen des Gefässes in das Abwasser und von dort, wie verworfene Resten von Dispersionsfarben, ebenfalls direkt in die Kanalisation.

Der Erfinder hat sich die Aufgabe gestellt, ein Verfahren und eine Vorrichtung der eingangs genannten Art zu schaffen, welche eine fach- und umweltgerechte Entsorgung von Dispersionen, insbesondere Dispersionsfarben, und entsprechende Feststoffpartikel enthaltenden Abwässern auf einfache und wirtschaftliche Weise erlauben.

In bezug auf das Verfahren wird die Aufgabe erfindungsgemäss nach dem Kennzeichen von Patentanspruch 1 gelöst.

Als Ausflockungsmittel, welche Reaktions-Trennmittel sind, können je nach Anwendung zahlreiche Produkte auf dem Markt bezogen werden.

Chemisch-physikalisch sind Reaktions-Trennmittel in der Regel pulverförmige Zubereitungen auf der Basis modifizierter Spalt-Adsorptions-Reaktionsmittel. Spaltreagentien und Additive lassen sich optimal verteilen, wodurch ihre chemische Reaktivität erheblich gesteigert wird.

In verunreinigtem Abwasser mit Dispersionsresten werden auch Schadstoffe adsorptiv aus dem Abwasser entfernt, indem sie durch chemische Reaktion feinstverteilt und im Coagulat, der Ausflockung, eingebunden sind.

Das Ausflocken erfolgt im wesentlichen dadurch, dass Dispersionen oder mit Dispersionen verunreinigte Abwässer unter ständigem Rühren mit vorzugsweise 5 - 10 g/l, insbesondere etwa 10 g/l, wenigstens eines geeigneten, an sich bekannten Reaktions-Trennmittels versetzt werden. Nach etwa 5 bis 10 min, insbesondere 6 bis 7 min dauerndem, gründlichem Einmischen von Reaktions-Trennmittel bilden sich gut sichtbare Flocken, welche im Gegensatz zu einer Dispersion abgetrennt werden können, vorzugsweise durch Filtrieren, Dekantieren oder Sedimentieren.

Im peripheren Bereich eines Reaktionsgefässes mit rotierendem Inhalt kann ein Ablenkblech derart angeordnet sein, dass wie bei einem Ablauf ein Trichter gebildet wird. Dadurch wird das homogene Einmischen sprunghaft beschleunigt.

Alle erfindungsgemäss gereinigten Abwässer mit Dispersionsresten haben, insbesondere bei Zugabe weiterer entsprechender Reaktions-Trennmittel, einen Schadstoffgehalt unter den gesetzlich vorgeschriebenen Grenzwerten, beispielsweise für Kohlen-Wasserstoffe unter 20 mg/l, weshalb das gereinigte Abwasser problemlos in die öffentliche Kanalisation abgelassen werden kann.

Zweckmässig wird jedoch das gereinigte Abwasser nicht abgelassen, sondern rezykliert und wieder zum Verdünnen von Dispersionen oder zum Reinigen von Pinseln, Rollen oder dgl. mit Dispersionsfarbresten verschmutzten Werkzeugen, beispielsweise Malergeräten, verwendet. Diese Geräte werden auf einem Rost oberhalb des Reaktionsbehälters oder in diesem selbst angeordnet.

In der Praxis wird wenigstens ein Reaktions-Trennmittel meist chargenweise zum verunreinigten Abwasser gegeben, indem für ein bestimmtes Reaktionsbehältervolumen eine zu berechnende Menge Reaktions-Trennmittel zugegeben wird. Das Abwasser mit dem ausgeflockten Produkt kann sofort oder nach Lagerung in einem Schmutzwasserbehälter filtriert werden.

Das Ausflocken kann jedoch auch kontinuierlich, in einem Durchflussverfahren, erfolgen. Bei einem bestimmten Durchfluss von z.B. Dispersionsfarbe enthaltendem Abwasser pro Zeiteinheit wird kontinuierlich wenigstens ein Reaktions-Trennmittel zudosiert. Im weiteren Durchfluss durch ein Mischsystem wird das Reaktions-Trennmittel homogen in das Abwasser eingemischt. Nach wenigen Minuten entsteht eine Ausflockung, welche kontinuierlich oder diskontinuierlich abgetrennt wird.

In bezug auf die Vorrichtung zur Durchführung des Verfahrens wird die Aufgabe erfindungsgemäss nach dem Kennzeichen von Patentanspruch 2 gelöst. Spezielle und weiterbildende Ausführungsformen des Entsorgungsgerätes sind Gegenstand von abhängigen Patentansprüchen.

Eine Vorrichtung zur chargenweisen Entsorgung von mit Dispersionsrückständen verunreinigten Abwässern umfasst bei einfachen Anlagen zwei übereinanderliegende Behälter, wobei diese in Abstand auf einem Gestell aufliegen oder in Abstand stapelbar ausgebildet sind. Die Vorrichtungen können rein manuell, halb- oder vollautomatisch betrieben werden.

Grössere Anlagen können nebeneinander oder gar in verschiedenen Geschossen angeordnete Reaktions- und Filterbehälter umfassen, wobei dem Filterbehälter ein Schmutzwasserbehälter vorgeschaltet sein kann.

Mit der erfindungsgemässen Vorrichtung können auch ölhältige Abwässer ohne Dispersionsresten entsorgt werden, beispielsweise Industrie-, Garage-, Druckerei- oder Färbereiabwässer, indem entsprechende, an sich bekannte Reaktions-Trennmittel eingemischt werden.

Die Erfindung wird anhand von in der Zeichnung dargestellten Ausführungsbeispielen, welche auch Gegenstand von abhängigen Patentansprüchen sein können, näher erläutert. Es zeigen schematisch:
- Fig. 1 ein bekanntes Filterteil für Abwasser mit bereits ausflockten Verunreinigungen,
- Fig. 2 auf einem Gestell übereinander angeordnete Behälter des Reaktions- und Filterteils,
- Fig. 3 eine Variante von Fig. 2 in Draufsicht,
- Fig. 4 eine Draufsicht auf ein Reaktionsteil mit hydraulischem Mischwerk,
- Fig. 5 ein halbautomatisches Kompaktgerät in einem Gehäuse,
- Fig. 6 eine Ansicht eines vollautomatischen Kompaktgerätes in einem Gehäuse, und
- Fig. 7 eine Draufsicht auf das Kompaktgerät gemäss Fig. 6.

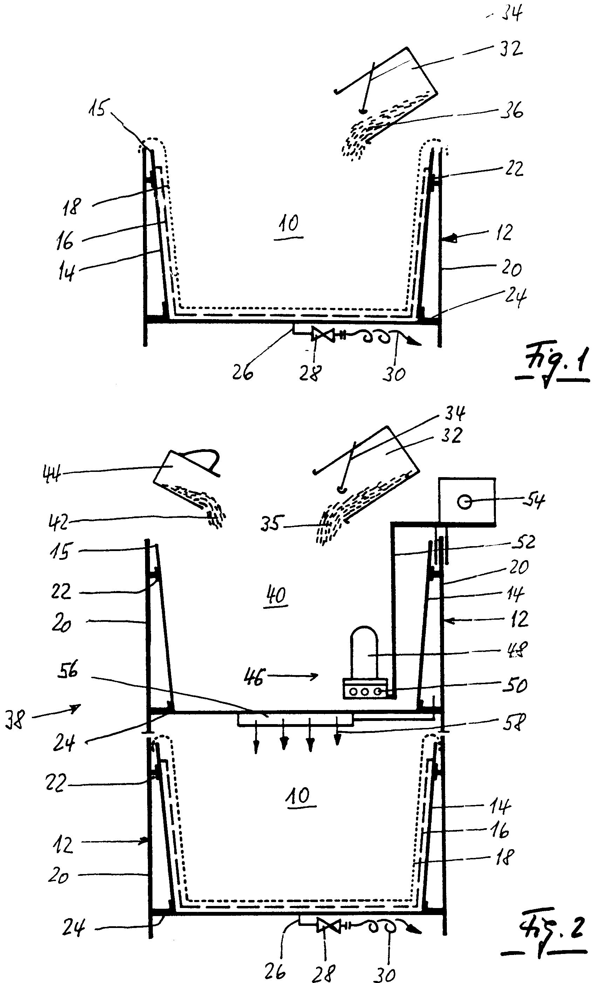

Fig. 1 zeigt einen bekannten Filterteil 10 mit einem Traggestell 12, einem darin gelagerten Behälter 14 mit einem in Abstand innenliegenden, wasserdurchlässigen Tragkorb und einem darauf liegenden Filtertuch 18.

Das Traggestell 12 besteht beispielsweise aus drei oder vier metallischen Pfosten 20, einem oberen runden Tragring 22 und drei unteren Seitenstützen 24.

Der Behälter 14 besteht zweckmässig aus naturfarbigem Polyäthylen mit einem Nutzvolumen von z.B. 55 1. Der Behälter ist in Abstand vom Boden angeordnet und hat einen zentralen Ablauf 26 mit einem manuell oder magnetisch betätigbaren Ablaufventil 28. Ein Ablaufschlauch 30 führt das gereinigte Abwasser in die Kanalisation.

Der im Behälter 14 in Abstand angeordnete Tragkorb muss einerseits stark wasserdurchlässig sein und andererseits das Filtertuch 18 abstützen. Dazu ist ein Lochblech, ein Schlitzblech oder ein starres Gitter genügender mechanischer Festigkeit geeignet. Der Begriff Blech umfasst hier nicht nur metallische Werkstoffe, sondern auch entsprechend mechanisch feste Kunststoffe.

Das Filtertuch 18, ein Gewebe oder Vlies, besteht aus natürlichen oder künstlichen Fasern, welche neben einer hinreichenden Reissfestigkeit chemisch inert sind. Die Dimensionen des Filtertuchs 18 erlauben ein Ueberschlagen des oberen Randes 15 des Behälters 14.

Ueber dem Behälter 14 ist ein Kessel 32 mit einem Traggriff 34 in Ausgiessposition dargestellt. Vorgängig sind in diesem Kessel 32, einem Reaktionsbehälter, die Feststoffpartikel durch Zugabe eines Reaktions-Trennmittels unter Rühren aus dem dispersionshaltigen Abwasser ausgeflockt worden. Beim Kessel 32 kann es sich um ein zufällig an Ort und Stelle vorhandenes Gefäss oder ein leeres Farbgebinde handeln, welches mit der zu verwerfenden Dispersion und/oder dem verunreinigten Abwasser gefüllt wird. Nach etwa 6 min dauerndem, gründlichem Einmischen von Reaktions-Trennmittel durch Umrühren mit einem von beispielsweise mit einer Handbohrmaschine angetriebenen Rührer bilden sich gut sichtbare Flocken. Die Anzahl Umdrehungen pro Minuten des Rührers liegt beispielsweise im Bereich 700 bis 1000/min. Das so behandelte Abwasser mit ausgeflocktem Produkt 36 wird langsam in den Filterteil 10 entleert.

Der Einsatz dieser Vorrichtung ist mühsam und nur für Kleinstmengen geeignet.

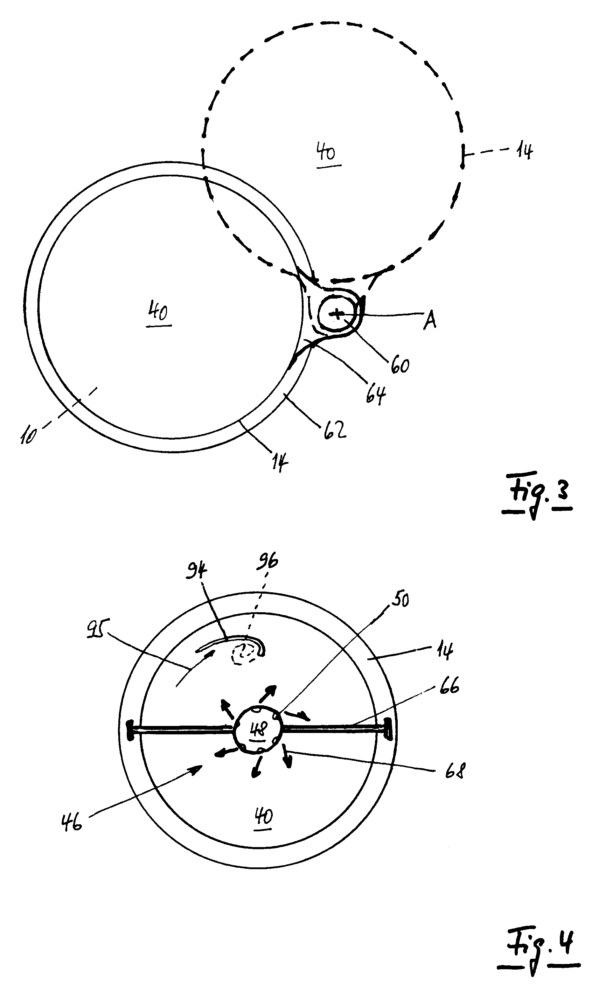

In einem der erfindungsgemässen Vorrichtung entsprechenden Entsorgungsgerät 38 gemäss Fig. 2 sind im wesentlichen zwei Traggestelle 12 mit je einem Behälter 14 übereinander angeordnet, im vorliegenden Fall durch Ineinanderstecken der Traggestelle 12. Bei Behältern 14 mit an einem Tragring angeordneten oder am Behälter angeformten Füssen ergibt sich das in Abstand erfolgende Aufeinanderstapeln ohne Traggestell 12.

Der obere Behälter 14 hat weder Tragkorb 16 noch Filtertuch 18, er ist als Reaktionsteil 40 ausgebildet. Mit einem Kessel 32 werden unbehandelte verworfene Dispersionsfarben und/ oder dispersionshaltige Abwässer 35 in den Behälter 14 des Reaktionsteil 40 entleert. Dieser Vorgang kann in den Grenzen der Volumenverhältnisse zwischen Behälter 14 und Kessel 32 beliebig oft wiederholt werden. Wahlweise kann das zu behandelnde Gut 35 auch über eine nicht gezeichnete Leitung in den Behälter 14 des Reaktionsteils 40 gepumpt werden.

Die Zugabe eine Ausflockungsmittels 42, insbesondere eines Reaktions-Trennmittels, ist mit einem Messbecher 44 in Entleerungsposition dargestellt. Nach einer nicht dargestellten Variante kann das Ausflockungsmittel 42 auch mittels einer kontinuierlichen oder nicht kontinuierlichen Dosiereinrichtung zugegeben werden, beispielsweise über einen fluidisierbaren Schüttkanal, eine Dosierschublade oder einen Dosierkolben.

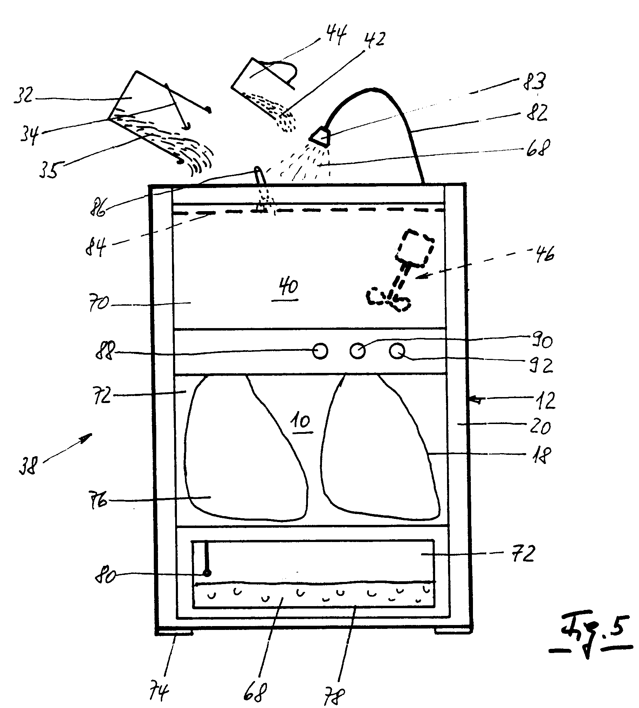

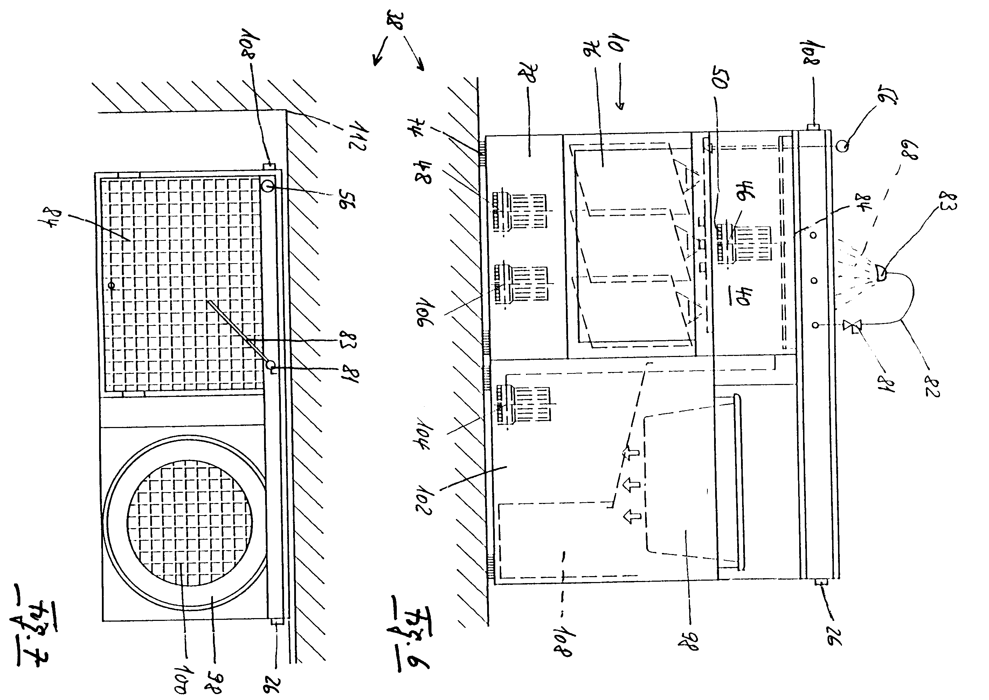

Auf einem Pfosten 20 des oberen Traggestells 12 ist ein als Einbaueinheit ausgebildetes hydraulisches Mischwerk 46 aufgesteckt. Dieses umfasst im vorliegenden Fall eine Pumpe 48, welche über den Ablaufschlauch 30 des Filterteils 10 gereinigtes Abwasser (68 in Fig. 5) und/oder Leitungswasser ansaugt. Der Uebersichtlichkeit wegen ist der zur Pumpe 48 führende Ablaufschlauch 30 nicht vollständig gezeichnet. Das rezyklierte Abwasser wird von der Pumpe 48 über Austrittsöffnungen 50 in das dispersionshaltige Abwasser im Reaktionsteil 40 gespritzt. Dabei wird das rezyklierte Wasser vorzugsweise in verschiedenen Richtungen ausgespritzt, was eine gute Durchmischung zur Folge hat. Derartige Pumpenköpfe sind an sich bekannt, beispielsweise von Kanalisationsreinigungsanlagen. Die über ein Gestänge 52 aufgehängte Pumpe 48 wird über einen Einschaltknopf 54 oder bei weiterentwickelten Vorrichtungen prozessorgesteuert betätigt.

Nach einer nicht dargestellten Variante kann zusätzlich ein konventionelles Rührwerk als Einbaueinheit aufgesteckt werden, welches einen mechanisch angetriebenen Rührer umfasst.

Auch der obere Behälter 14 des Reaktionsteils 40 hat einen Ablauf 56, welcher mit einem Ventil, Schieber oder dgl. verschliessbar ist. Beim Oeffnen des Ablaufs fliesst das Abwasser mit den ausgeflockten Rückständen in den Filterteil 10, was mit Pfeilen 58 angedeutet ist.

Zur Betätigung des Entsorgungsgerätes 38 gemäss Fig. 2 wird das hydraulische Mischwerk 46 im Reaktionsteil 40 durch manuelle Betätigung des Knopfes 54 in Funktion gesetzt und gleichzeitig das entsprechende Reaktions-Trennmittel 42 mit einer Konzentration von etwa 10 g/l von Hand mittels eines Messbechers 44 eingestreut. Nach etwa 7 min Laufzeit des Rührwerkes 46 erfolgt die Ausschaltung automatisch. Nach dem Rührvorgang wird der Ablauf 56 durch Oeffnen eines nicht erkennbaren Abschlussventils das Wasser mit den ausgeflockten Rückständen aus dem Reaktionsteil 40 in den Filterteil 10 abgeleitet. Bevor eine neue Charge Abwasser und/oder verworfene Dispersionsfarbe in den Reaktionsteil 40 geschüttet oder geleitet wird, ist der Ablauf 56 des oberen Behälters 14 wieder verschlossen.

Das Vorspülen von Werkzeugen entspricht im Prinzip Fig. 5 und ist hier nicht dargestellt.

Fig. 3 zeigt den an einem vertikalen Stativ 60 mit Sockelplatte 62 aufgehängten Behälter 14 eines Reaktionsteils 40.

Der an einem nicht sichtbaren Tragring 64 aufgehängte Behälter 14 ist um eine Achse A des Stativs 60 schwenkbar. In der gestrichelt eingezeichneten Position des obenliegenden Behälters 14 wird der untenliegende Filterteil 10 freigelegt, was mit einer gestrichelten Linie zur Bezugsziffer angedeutet ist. Reaktions- 10 und Filterteil 40 haben den gleichen Aussendurchmesser und gleichgrosse Behälter 14. In der ausgeschwenkten Position des Reaktionsteils 40 kann das Filtertuch 18 (Fig. 1, 2) problemlos entfernt werden.

In einem in Fig. 4 dargestellten Behälter 14 des Reaktionsteils 40 ist ein hydraulisches Mischwerk 46, gestützt durch zwei diagonal angeordnete, in der Seitenwand des Behälters 14 verankerte Stege 66, aufgehängt. Die Austrittsöffnungen 50 der Pumpe 48 sind so gestaltet, dass das dem Filterteil 10 (Fig. 1, 2) rezyklierte Wasser 68 oder Leitungswasser in Richtung der Pfeile ausgespritzt wird. Wenn alle das ausgespritzte rezyklierte Wasser 68 darstellenden Pfeile im gleichen Drehsinn von der radialen Richtung abweichen, wird der flüssige Behälterinhalt in eine Rotationsbewegung versetzt. Ein Ablenkblech 94 bewirkt, dass das in Richtung des Pfeils 95 strömende Wasser einen lokalen Rotationstrichter 96 bildet, welcher das Einmischen des Flockungsmittels sprunghaft verbessert.

In an sich bekannter Weise kann das Wasser auch in verschiedenen Richtungen ausgespritzt werden, wodurch eine Rotation im Reaktionsgefäss 14 verhindert wird.

Das in Fig. 5 dargestellte kompakte Entsorgungsgerät 38 mit einem Reaktionsteil 40 und einen Filterteil 10 ist in einem mit metallischen Deckplatten 70 und mit transparenten Platten 72 aus Glas oder Kunststoff verkleideten Traggestell 12 angeordnet. Das Kompaktgerät kann an eine Wand gestellt, freistehend im Raum angeordnet oder als Mobil-Gerät ausgebildet sein, wobei im letzten Fall die Tragfüsse 74 durch arretierbare Rollen ersetzt sind.

Im Filterteil 10 sind zwei Filtersäcke 76 aufgehängt, welche aus Filtertuch 18 oder vorzugsweise aus Jute mit innenliegendem Faservlies bestehen. Die Filtersäcke 76 sind an zwei nicht sichtbaren, verschliessbaren Abläufen des Behälters im Reaktionsteil 40 angehängt. Nach einer nicht dargestellten Variante kann dieser Behälter auch nur einen Ablauf und ein Verteilersystem mit Anhängevorrichtungen für Filtersäcke 76 haben. Dieses Verteilersystem kann durch einzeln verschliessbare Ausflüsse so ausgestaltet sein, dass der Betrieb kontinuierlich erfolgen kann. Weiter kann im Filterteil 10 anstelle der in der Regel zwei bis sechs Filtersäcke 76 wenigstens ein Behälter 14 mit Tragkorb 16 und Filtertuch 18 gemäss Fig. 1 angeordnet sein.

Unterhalb der Filtersäcke 76 ist eine Auffangwanne 78 angeordnet, welche das gereinigte Abwasser 68 aufnimmt. Ein auf einstellbarem Niveau montierter Schwimmer oder eine Sonde 80 leitet den Ablauf oder das Abpumpen des gereinigten Abwassers 68 ein, sobald dessen Oberfläche das entsprechende Niveau erreicht hat. Ein entsprechender Schwimmer oder eine entsprechende Sonde 80 kann auch für die Festlegung einer minimalen Niveauhöhe des gereinigten Abwassers eingesetzt werden.

Eine nicht dargestellte Pumpe rezykliert das gereinigte Abwasser 68 und führt es über einen ebenfalls nicht sichtbaren Schlauch in dem Bereich oberhalb des Reaktionsteils 40. Ein verstellbarer Ausfluss 82 hat eine Brause oder Düsenleiste 84, welche das rezyklierte Wasser 68 und/oder wahlweise Leitungswasser in den oben offenen Reaktionsteil 40 spritzt.

Auf einem gestrichelt eingezeichneten Rost 84, beispielsweise als Lochblech, Schlitzblech oder Gitter ausgebildet, können mit Rückständen von Dispersionsfarben verschmutzte Malerwerkzeuge 86 angeordnet sein, welche mit dem rezyklierten Wasser 68 und/oder zugeschossenem Leitungswasser gereinigt werden. Von den Malerwerkzeugen 86 ist stellvertretend ein Pinsel angedeutet.

Ein gestrichelt eingezeichneter mechanischer Rührer 45 kann zusätzlich zu einem hydraulischen Mischwerk 46 gemäss Fig. 2 oder 4 angeordnet sein.

Die in Fig. 5 dargestellte Variante des Kompaktgerätes 38 arbeitet wie folgt:
- Durch Druck auf einen Knopf 88 wird vorrätiges gereinigtes Abwasser 68 zu einem flexiblen Ablaufschlauch (30 in Fig. 1, 2) gepumpt und zu Reinigungszwecken von Malerwerkzeugen 86 verwendet. Nach 3 min Betrieb schaltet die Förderpumpe programmgesteuert ab. Bei weiterem Bedarf von Waschwasser muss der Knopf 88 erneut betätigt werden, wobei allenfalls automatisch Leitungswasser zugeschossen wird.
- Mit Druck auf einen Knopf 90 wird das hydraulische Mischwerk 46 des Reaktionsteils 40 in Betrieb gesetzt. Vorerst werden etwa 10 g/l des Reaktions-Trennmittels 42 mit einem Messbecher 44 eingestreut oder mit einer Dosiervorrichtung zugegeben. Nach der Flockenbildung schaltet das Mischwerk 46 automatisch aus, zweckmässig nach einer Laufzeit von etwa 7 min des Rührwerks 46. Nun werden die beiden Ventile an den Abläufen des Reaktionsteils 40 geöffnet, das Wasser strömt durch die beiden Filtersäcke 76 in die Auffangwanne 78 für das gereinigte Abwasser 68. Erreicht das Wasserniveau den Schwimmer oder die Sonde 80, wird das gereinigte Abwasser 68 automatisch in die Kanalisation gepumpt, sofern und soweit es nicht als rezykliertes Abwasser benötigt wird.
- Durch ununterbrochenes Betätigen des Knopfes 92 kann die Auffangwanne 78 vollständig entleert werden, sei es durch das Rückführen des gereinigten Abwassers 68 in den Reaktionsteil 40 oder durch dessen Ableitung in die Kanalisation.
- Vor der Bearbeitung einer neuen Charge von Abwasser 35 mit Rückständen von Dispersionsfarben werden die beiden miteinander verbundenen Ablaufventile oberhalb der Filtersäcke 76 manuell oder automatisch verschlossen.

In Fig. 6, 7 ist eine vollautomatische Vorrichtung zum Entfernen von Dispersionen und entsprechenden Feststoffpartikeln aus Abwasser und zum Vorspülen von Malerwerkzeugen dargestellt. Im wesentlichen entsprechen Fig. 6, 7 der vorstehend im Detail diskutierten Fig. 5. Dieses Gerät wird vorwiegend im Zusammenhang mit vorhandenen Gruben oder Grossbehältern in Verbindung mit Stapelbehältern und Abscheidern unter bestehenden Waschtrögen eingesetzt. Geeignet ist es auch für einen Baustelleneinsatz. Das Gerät ist mit Kreislaufwasser ausgerüstet, die gereinigten Abwässer werden also rezykliert. Bei einem Elektroanschluss von 230 V wird eine Stundenleistung von 200 - 300 l Abwässern erbracht. Zusätzlich hat Fig. 6 ein verlängertes Abteil mit einem Ausgussbecken 98. Ueber diesem Ausgussbecken 98 ist, obwohl nicht dargestellt, ein verschliessbarer Ausfluss 82, wie oberhalb des Filterteils 10, angeordnet. Auch über diesem Ausgussbecken 98 ist ein Rost 100 angeordnet. Unterhalb des Ausgussbeckens 98 ist ein Stapelbehälter 102 mit einer Stapelbehälterpumpe 104 und ein auswechselbarer Feststoffabscheider 110 angeordnet.

Eine Pumpe 48 betreibt einerseits das hydraulische Mischwerk 46 mit Austrittsöffnungen 50 für das gereinigte rezyklierte Abwasser 68. Bei geöffnetem Wasserhahn 81 und eingeschalteter Pumpe 48 strömt das gereinigte rezyklierte Abwasser auch über die Brause 83 auf nicht dargestellte Malerwerkzeuge und kann diese problemlos reinigen, wobei das verunreinigte Wasser wieder gereinigt wird. Eine Entleerungspumpe 106 fördert nicht rezykliertes gereinigtes Abwasser über einen Ablauf 26 in die Kanalisation. Mit 108 sind Anschlussstutzen für Kalt- und/oder Warmwasser angedeutet.

Die erfindungsgemässe Vorrichtung, ein Entsorgungsgerät, kann Füsse 47 oder Rollen aufweisen und fest oder fahrbar installiert werden. Bevorzugt ist das Gerät im Bereich einer Mauerecke 112 aufgestellt.

Nachdem mit der Verwendung von Dispersionsfarben mit Wasser anstelle von organischen Lösungsmitteln ein erster Schritt in Richtung eines besseren Umweltschutzes und einer grösseren Arbeitsplatzhygiene gemacht worden ist, ermöglicht es die vorliegende Erfindung auf einfache und wirtschaftliche Weise, das Abführen von Resten von Dispersionsfarben oder mit Dispersionsfarben verunreinigtem Abwasser in die Kanalisation zu verhindern. Die Feststoffpartikel werden samt allfälligen weiteren Schadstoffen ausgeflockt und abfiltriert. Die nunmehr festen, sauber abgetrennten Abfallstoffe können problemlos entsorgt werden.

## Patentansprüche

1. Verfahren zum Entfernen von Dispersionspartikeln, insbesondere von Dispersionsfarbpartikeln, und entsprechenden Feststoffpartikeln aus Abwässern (35), wobei in einem Reaktionsteil (40) wenigstens ein Ausflockungsmittel (42) zum diespersionshaltigen Abwasser (35) gegeben und homogen eingemischt, das ausgeflockte Produkt (36) in einem Filterteil (10) abgetrennt wird und das gereinigte Abwasser (68) im Kreislauf zum Reaktionsteil (40) zurückgeführt wird,
dadurch gekennzeichnet, dass
das rezyklierte Abwasser (68), ggf. mit einem Zuschuss von Leitungswasser, zur Erzeugung einer Mischbewegung in den Reaktionsteil (40) geleitet wird, und dass weiter mit dem rezyklierten Abwasser (68) über dem Reaktionsteil (40) angeordnete, dispersionsverschmutzte Werkzeuge (86) gespült werden.

2. Vorrichtung zur Durchführung des Verfahrens nach Anspruch 1, mit einem Entsorgungsgerät (38) aus einem stromauf angeordneten Reaktionsteil (40) zum Mischen und Ausflocken, welcher ein integriertes Mischwerk und einen verschliessbaren Ablauf (56) umfasst, und einem stromab angeordneten Filterteil (10) mit wenigstens einem auswechselbaren Filter (18,76) und einem verschliessbaren Ablauf (26),
dadurch gekennzeichnet, dass
ein im Reaktionsteil (40) angeordnetes hydraulisches Mischwerk (46) mit umlaufenden Austrittsöffnungen (50) für zugeführtes rezykliertes gereinigtes Abwasser (68) und ggf. zusätzlich zugeführtes Leitungswasser ausgebildet ist, oder die Leitung (30) für das rezyklierte Abwasser (68) in einer Brause (83) oder Düsenleiste des Ausflusses (82) oberhalb des Reaktionsteils (40) geführt ist.

3. Vorrichtung nach Anspruch 2, dadurch gekennzeichnet, dass das Mischwerk einen zusätzlichen mechanischen Mischer umfasst.

4. Vorrichtung nach Anspruch 2 oder 3, dadurch gekennzeichnet, dass die den Reaktionsteil (40) und den Filterteil (10) bildenden übereinanderliegenden Behälter (14) nach einer ersten Variante in einem Traggestell (12) aufeinanderliegende oder nach einer zweiten Variante stapelbare Kunststoffbehälter sind.

5. Vorrichtung nach einem der Ansprüche 2 bis 4, dadurch gekennzeichnet, dass der obenliegende Reaktionsteil (40) schwenkbar an einem vertikalen Stativ (60) befestigt ist.

6. Vorrichtung nach einem der Ansprüche 2 bis 5, dadurch gekennzeichnet, dass im Filterteil (10) ein Behälter (14) mit einem innenliegenden, in Abstand angeordneten, wasserdurchlässigen Tragkorb (16), vorzugsweise aus einem Lochblech, einem Schlitzblech oder einem starren Gitter, und einem darauf liegenden Filtertuch (18) angeordnet ist.

7. Vorrichtung nach einem der Ansprüche 2 bis 6, dadurch gekennzeichnet, dass der Reaktionsteil (40), der Filterteil (10) und eine darunter liegende Auffangwanne (78) für das gereinigte Abwasser (68) in einem kompakten Gehäuse (12,70,72) angeordnet sind.

8. Vorrichtung nach einem der Ansprüche 2 bis 7, dadurch gekennzeichnet, dass der Filterteil (10) aus zwei bis vier Filtersäcken (76) besteht.

9. Vorrichtung nach Anspruch 8, dadurch gekennzeichnet, dass die Filtersäcke (76) als Jutesäcke mit einem innenliegenden Faservlies ausgebildet sind.

10. Vorrichtung nach einem der Ansprüche 2 bis 9, dadurch gekennzeichnet, dass ein Rezykliersystem mit einer vom Ablauf (26) des Filterteils (10) zum Reaktionsteil (40) führenden Leitung (30), einer Pumpe (48) und vorzugsweise Regelventilen (28) am Ablauf (26,56) der Behälter (14) vorgesehen ist.
